# EUROPEAN PATENT SPECIFICATION

(11) **EP 2 275 320 B1**
(45) Date of publication and mention of the grant of the patent: **12.11.2014**
(21) Application number: 10167735.9
(22) Date of filing: 29.06.2010
(51) Int. Cl.: B62B 3/04, B62B 3/08, B62B 5/00, B62B 5/06

(54) **Shelf cart**
Ablagewagen
chariot de dépose

(30) Priority: 15.07.2009 TR 200905492
(43) Date of publication of application: 19.01.2011
(73) Proprietor: Tofas Turk Otomobil Fabrikasi Anonim Sirketi, 34394 Istanbul (TR)
(72) Inventor: Yigit, Bayram, 16369, BURSA (TR)
(74) Representative: Dericioglu, M. Kaan

(56) References cited:
- EP-A1- 1 093 741
- WO-A1-2005/112710
- DE-A1- 2 419 913
- GB-A- 1 197 157
- US-A- 3 981 511

## Description

### Field of the Invention

The present invention relates to a shelf cart which enables carrying objects thereon and which, upon being fixed in a specific position, allows using the objects located thereon.

### Background of the Invention

Access to the production main parts and the connection parts fastening these main parts should be easy especially in production sites. For this reason, there are shelves which enable access to these parts and which are often located right next to the production line. However, since these shelves are immovable, when the number of parts in the shelves at the production line decreases, refilling these shelves at the line poses problems and takes time. Additionally, depending on the production variety and increase, there arise placement problems in the line in terms of the material density next to the line. Due to the fact that the shelves are situated at a fixed position in the line, operators often experience problems in accessing the said shelves and this causes production time to increase.

A shelf cart according to the preamble of claim 1 is shown by WO 2005/112710 A1.

The Japanese patent document No. JP11056488 discloses a shelf system. In this system, the compartments of the shelf can be removed. Since there is a plurality of compartments on the shelf, various parts can be conveniently placed. Additionally, large parts are also enabled to be stored in the shelf. The compartments of the said shelf are movable. A forklift can be used when placing heavy parts on the shelf. The forklift can place the parts into the compartments of the shelf. However there is no inclined system in this system which provides an ergonomic improvement.

The compartments of the shelf described in the above mentioned Japanese patent document can be opened and closed only for protection purposes. Since the angles of the said compartments can not be altered in any way, the operator has difficulty in receiving the required members from the shelf in some positions and this causes the production time to increase. Furthermore, the materials to be supplied to the said shelf are carried by a forklift and this causes both time loss in the production line and increase in the cost.

### Summary of the Invention

The objective of the present invention is to realize a movable shelf cart.

A further objective of this invention is to realize a shelf cart where the boxes placed thereon can remain in inclined position.

Another objective of the present invention is to realize an ergonomic shelf cart.

A further objective of this invention is to realize a shelf cart which enables to eliminate use of forklifts in the production lines.

Yet another objective of the invention is to realize a shelf cart which allows a plurality of materials to be carried at one time from the stock area to the line-side by shelf carts in a convoy thanks to the fact that the shelf carts can be coupled to each other in succession.

### Detailed Description of the Invention

A shelf cart developed to fulfill the objectives of the present invention is illustrated in the accompanying figures, in which,
FIGURE -1 is the perspective view of the inventive shelf cart.
FIGURE -2 is the detail view of the movable section of the inventive shelf cart in inclined position.
FIGURE -3 is the detail view of the drawbar of the inventive shelf cart.

The components illustrated in the figures are individually numbered where the numbers refer to the following:
1. Shelf cart
2. Body
3. Wheel
31. Swivel wheel
4. Fixed section
5. Movable section
6. Hinge
7. Drawbar
8. Stopper
9. Lug
10. Hole
11. Lock
12. Towing pin

The shelf cart (1) is comprised of a body (2), and at least one wheel (3), which is connected to the body (2) and which enables movement.

The body (2) consists of at least two sections, namely fixed section (4) and the movable section (5). The said sections are connected to each other via a hinge (6). The fixed section (4) carries on it the movable section (5). The wheel (3) which enables movement of the cart (1) is connected to the lower surface of the fixed section (4). The boxes and similar objects (hereinafter will be referred to as boxes) that are intended to be carried are placed on the movable section (5). The movable section (5) can rotate around the hinge (6) axis and thus can be brought to the desired angle. The angled position of the movable section (5) facilitates access to the box, which is located on the movable section (5) and which enables the pieces to be stored therein, and this prevents the operator from losing time during production. Additionally, the movable section (5) should be locked to the fixed section (4) not to lose its position when it is parallel to the ground. There is at least one lug (9) provided on the movable section (5) and a hole (10) on the lug (9) to realize the said locking operation.

There is at least one drawbar (7) mounted on the fixed section (4). On the said drawbar (7), there is provided at least one stopper (8) which fixes the movable section (5) in inclined position whereby prevents it from suddenly losing its current position. The fixed section (4) comprises at least one lock (11). The said lock (11) is preferably pin shaped and it fits into the hole (10) on the lug (9) when the movable section (5) is intended to be locked. This way, the movable section (5) is prevented from freely moving on the fixed section (4). Additionally, there is at least one towing pin (12) on the surface opposite to the surface where the drawbar (7) is located. When a convoy of a plurality of carts (1) is intended to be formed, the towing pin (12) of one cart is connected to the drawbar (7) of another cart (1). Thus a plurality of carts (1) is enabled to be connected and to move together.

The wheel (3) that enables the shelf cart (1) to move also includes a brake (not shown in the figures) which obstructs movement of the cart (1) upon being fixed in the desired position. When the brake (3) obstructs movement of the wheel (3), the cart (1) is prevented from going to an unintended place. When boxes are being carried on the shelf cart (1), the movable section (5) is preferably positioned to be parallel to the ground so that the objects in the boxes and the boxes do not fall down from the cart (1).

In the preferred embodiment of the invention, the shelf cart (1) is used for carrying thereon the production main parts in the production line and positioning them at the line-side. The said shelf cart (1) comprises a body (2) consisting of two parts and four wheels (3, 31) which enable movement of the body (2) and are located on the lower surface of the body (2). The body (2) is comprised of a fixed section (4), and a movable section (5) which is connected to the said fixed section (4) via a hinge (6) and which may also be positioned at a certain angle to the fixed section (4). The boxes including production materials are placed on the movable section (5). There is provided an ease of access into the said boxes thanks to the inclined (angled) position of the movable section (5). There is provided one drawbar (7) mounted on the fixed section (4). There is a protrusion shaped stopper (8) on the said drawbar (7) extending parallel to the ground. The movable section (5) is seated on the stopper (8) whereby the movable section (5) is ensured to remain fixed in the inclined position that it is seated. In the described embodiment of the invention, the shelf cart (1) has four wheels (3) on the front and back. The cart (1) moving by means of its wheels (3) can be easily moved to any desired place within the production line. While the wheels (3) on one side are fixed, the wheels (31) on the other side can rotate 360 degrees around their own axes. Additionally, there is a brake provided in at least one of the wheels (3) that are able to rotate 360 degrees in order to obstruct movement of the cart, when the shelf cart (1) is desired to remain in a fixed position at a certain place. The brake is preferably provided in one of the front wheels (3).

In one embodiment of the invention, the inventive shelf cart (1) is placed under the fixed shelves located in the production plant. There are ancillary materials (screw, washer, clips, etc.) provided on the fixed shelf for mounting the main parts. The fixed shelf and the shelf cart (1) form an integrated structure enabling materials forming a group to stay together at the line-side. This way, space is saved at the line-side. Through this structure, accessing materials is made easier for both the users and the material feeders. The heavy materials which can not be carried manually are enabled to be carried next to the line without using a forklift. It is possible to develop various embodiments of the inventive shelf cart (1). The invention cannot be limited to the examples described herein; it is essentially according to the claims.

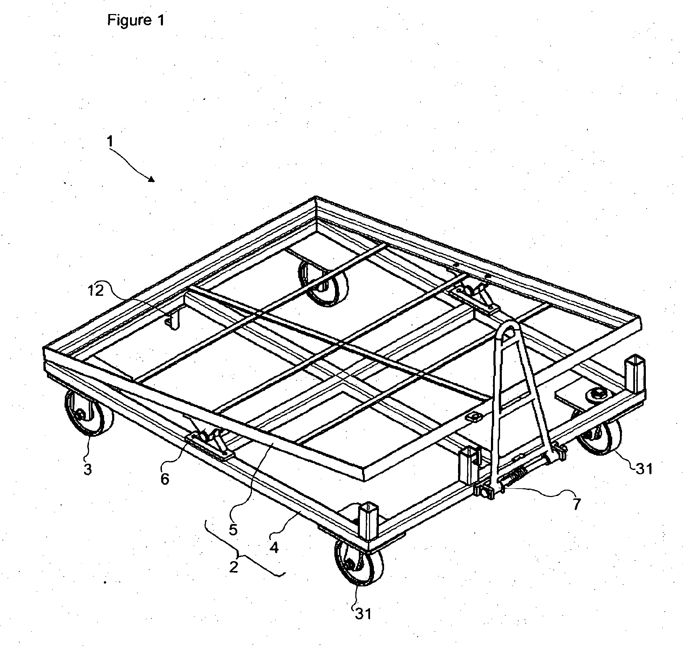

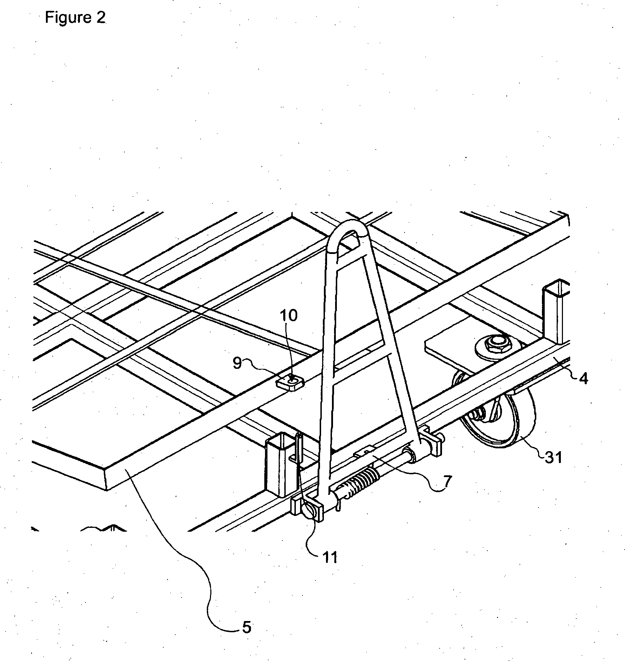

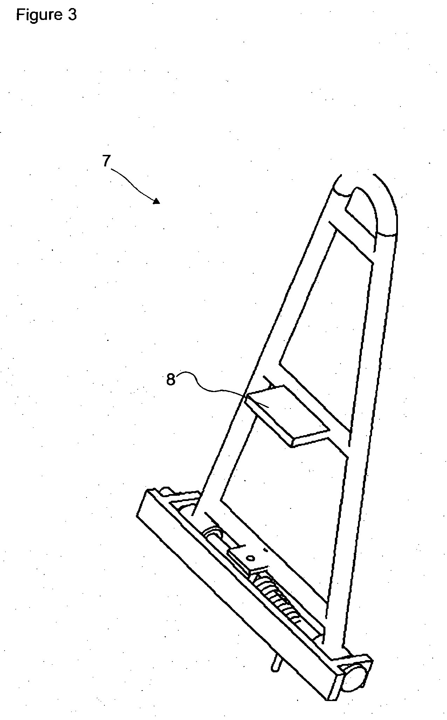

## Claims

1. A shelf cart (1) comprising a body (2) consisting of at least two sections, namely a fixed section (4) and a movable section (5),
and at least one wheel (3) which enables to move, and
at least one hinge (6) which connects the fixed section (4) and the movable section (5) to each other,
**characterized by** a drawbar (7) comprising at least one stopper (8) which is in the form of a protrusion extending parallel to the ground when being in a position to, fixe the movable section (5) in inclined position whereby preventing it from suddenly losing its current position, and
at least one towing pin (12) which is provided on the fixed section (4), on the surface opposite to the surface where the drawbar (7) is located and which fits into the drawbar (7) of another identical shelf cart (1), whereby enables the carts to be connected to each other for forming a convoy of carts (1).

2. A shelf cart (1) according to Claim 1, **characterized by** the movable section (5) having at least one lug (9) which enables locking onto the fixed section (4), and which can rotate around the hinge (6) axis and thus can be brought to the desired angle.

3. A shelf cart (1) according to Claim 2, **characterized by** the lug (9) having at least one hole (10).

4. A shelf cart (1) according to claim 3 **characterized by** the fixed section (4) having at least one lock (11) which, when the movable section (5) is desired to be locked, fits into the hole (10) on the lug (9) whereby preventing free movement of the movable section (5), and which is preferably pin shaped.

5. A shelf cart (1) according to any of the preceding claims, **characterized by** the at least one drawbar (7) being mounted on the fixed section (4) and
enabling the movable section (5) to remain fixed on the fixed section (4) in an inclined position.

6. A shelf cart (1) according to any of the preceding claims, **characterized by** the at least one wheel (3) comprising at least one brake which obstructs movement whereby enables the cart (1) to remain fixed at a certain position, and thus prevents the cart (1) from going to an unintended place.

7. A shelf cart (I) according to any of the preceding claims, **characterized by** at least two wheels (31) which, when the wheels (3) on one side are fixed, can rotate 360 degrees around their own axes on the other side.

8. A shelf cart (1) according to any of the preceding claims, **characterized by** the movable section (5) being preferably positioned to be parallel to the ground so that the objects in the boxes and the boxes do not fall down when boxes are being carried on the shelf cart (1).

## Patentansprüche

1. Ein Regalwagen(1) umfassend ein Gehäuse (2) bestehend aus mindestens zwei Teilen, und zwar einem festen Teil (4) und einem beweglichen Teil (5), und mindestens einem Rad (3), welches die Bewegung ermöglicht, und mindestens ein Gelenk (6), welches den festen Teil (4) und den beweglichen Teil (5) miteinander verbindet,
**gekennzeichnet durch** eine Zugstange (7) umfassend mindestens einen Anschlag (8), der sich in Form eines Vorsprungs mit dem Boden parallel erstreckt, wenn er in einer Stellung ist um den beweglichen Teil (5) in einer geneigten Stellung zu bringen, wobei verhindert wird, dass er seine geltende Stellung plötzlich verliert, und
mindestens einen Zugbolzen (12), der auf dem festen Teil (4) auf der Oberfläche gegenüber der Oberfläche vorgesehen ist, in der die Zugstange (7) angeordnet ist und welche in die Zugstange (7)eines anderen ähnlichen Regalwagens angebracht wird, wobei dies ermöglicht die Wagen zur Bildung einer Konvoi von Wagen (1) miteinander zu verbinden.

2. Ein Regalwagen (1) nach Anspruch 1, **gekennzeichnet durch** den beweglichen Teil (5), der mindestens einen Bügel (9) aufweist, welcher die Verriegelung auf dem festen Teil (4) ermöglicht und welcher um die Gelenk (6)-Achse gedreht und auf diese Weise in den gewünschten Winkel gebracht werden kann.

3. Ein Regalwagen (1) nach Anspruch 2, **gekennzeichnet durch** den Bügel (9), der mindestens ein Loch aufweist.

4. Ein Regalwagen (1) nach Anspruch 3, **gekennzeichnet durch** den festen Teil (4), der mindestens eine Sperre (11) aufweist, welcher in das Loch (10) auf dem Bügel (9) eingreift, wenn gewünscht wird, den beweglichen Teil (5) zu verriegeln, wobei die freie Bewegung des beweglichen Teils (5) verhindert wird und welcher vorzüglich in Form eines Bolzen ist.

5. Ein Regalwagen (1) nach einem der vorangehenden Ansprüche, **gekennzeichnet durch** mindestens eine Zugstange (7), die auf den festen Teil (4) angebracht ist und es ermöglicht, dass der bewegliche Teil (5) in einer geneigten Stellung auf dem festen Teil (4) bleibt.

6. Ein Regalwagen (1) nach einem der vorangehenden Ansprüche, **gekennzeichnet durch** mindestens ein Rad (3) umfassend mindestens eine Bremse, welche die Bewegung verhindert, wobei sie ermöglicht, dass der Wagen (1) in einer bestimmten Stellung fixiert ist und somit verhindert, dass der Wagen (1) zu einem unbeabsichtigten Ort fährt.

7. Ein Regalwagen (1) nach einem der vorangehenden Ansprüche, **gekennzeichnet durch** mindestens zwei Räder (31), welche um ihre eigene Achse auf der anderen Seite 360° gedreht werden kann, wenn die Räder (3) auf einer Seite befestigt sind.

8. Ein Regalwagen (1) nach einem der vorangehenden Ansprüche, **gekennzeichnet durch** den beweglichen Teil (5), der vorzugsweise parallel mit dem Boden zu positionieren ist, so dass die Gegenstände in den Kästen sowie die Kästen nicht herunterfallen, wenn die Kästen auf dem Regalwagen (1) getragen werden.

## Revendications

1. Une étagère à roues (1) comportant un corps (2) consistant en au moins deux sections, à savoir une section fixe (4) et une section mobile (5) et au moins une charnière (6) reliant la section fixe (4) et la section mobile (5) l'un à l'autre au moins une roue (3) permettant le mouvement, et **caractérisée par** une tige de connexion (7) comportant au moins un arrêt (8) en forme d'une protrusion s'étendant parallèlement au sol dans une position pour fixer la section amovible (5) à une position inclinée empêchant ce dernier de ne perdre pas sa position actuelle soudainement, au moins une cheville de remorquage (12) fournie sur la section fixe (4), sur la face opposé à la surface sur laquelle se situe la tige de connexion (7) et qui s'emboite dans la tige de connexion (7) de l'autre identique étagère à roues, permettant la connexion des roues l'une à l'autre pour former un convoi des roues (1).

2. Une étagère à roues (1) selon la revendication 1, **caractérisée par** la section mobile (5) comportant au moins une poignée (9) permettant le verrouillage sur la section fixe (4) et pouvant tourner autour de l'axe de la charnière (6) et ainsi pouvant être amené à l'angle désiré.

3. Une étagère à roues (1) selon la revendication 1, **caractérisée par** la poignée (9) comportant au moins un trou (10).

4. Une étagère à roues (1) selon la revendication 3, **caractérisée par** la section fixe (4) comportant au moins une serrure (11) qui, quand on veut verrouiller la section mobile (5), s'emboite dans le trou (10) sur la poignée (9) empêchant le mouvement libre de la section mobile (5) et de préférence étant en forme de cheville.

5. Une étagère à roues (1) selon l'une quelconque des revendications précédentes, **caractérisée par** au moins une tige de connexion (7) étant montée sur la section fixe (4) et permettant à la section mobile (5) de rester fixé sur la section fixe (4) dans une position inclinée.

6. Une étagère à roues (1) selon l'une quelconque des revendications précédentes, **caractérisée par** au moins une roue (3) comportant au moins un frein bloquant le mouvement et ainsi permettant à l'étagère à roues (1) de rester fixes dans une certaine position et empêchant l'étagère à roues (1) d'aller à une place non désirée.

7. Une étagère à roues (1) selon l'une quelconque des revendications précédentes, **caractérisée par** au moins deux roues (31) que, quand les roues (3) sur un côté sont fixées, peuvent tourner 360 degrés autour de leurs axes respectifs sur l'autre côté.

8. Une étagère à roues (1) selon l'une quelconque des revendications précédentes, **caractérisée par** la section mobile (6) étant positionnée de préférence afin qu'il soit parallèle au sol pour que les objets dans les boites et ces derniers ne tombent pas quand ils sont transportés sur l'étagère à roues (1)
